# EUROPEAN PATENT APPLICATION

(11) **EP 2 764 958 A1**
(43) Date of publication of application: **13.08.2014**
(21) Application number: 14154062.5
(22) Date of filing: 06.02.2014
(51) Int. Cl.: B25J 9/10

(54) **Joint mechanism and robot**

(30) Priority: 12.02.2013 JP 2013024958
(71) Applicant: Kabushiki Kaisha Yaskawa Denki, Kitakyushu-shi, Fukuoka 806-0004 (JP)
(72) Inventor: Tanaka, Kentaro, Kitakyushu-shi, Fukuoka 806-0004 (JP); Ichibangase, Atsushi, Kitakyushu-shi, Fukuoka 806-0004 (JP); Tsutsumi, Shingo, Kitakyushu-shi, Fukuoka 806-0004 (JP)
(74) Representative: Viering, Jentschura & Partner Patent- und Rechtsanwälte

(57) **Abstract**

A joint mechanism (3) includes a motor (4) including a motor shaft (41) and a hypoid pinion (61) provided at a tip end of the motor shaft (41) and a speed reducer (5) configured to reduce a rotation speed of the motor (4) at a speed reduction ratio. The speed reducer (5) includes a screw-shaped input shaft (51) and a ringshaped gear (52) meshing with the screw-shaped input shaft (51) and three-dimensionally intersecting the screw-shaped input shaft (51) at a right angle. Further, the screw-shaped input shaft (51) includes a shaft body (51b)provided with a screw portion (51a) and a hypoid gear (62) arranged at one end of the screw-shaped input shaft (51)and configured to mesh with the hypoid pinion (61). Furthermore, the screw-shaped input shaft (51) has an axis three-dimensionally intersecting the motor shaft (41) at a right angle.

## Description

### BACKGROUND OF THE INVENTION

### Field of the Invention

An embodiment disclosed herein relates to a joint mechanism and a robot.

### Description of the Related Art

Conventionally, there is available a robot including an arm unit and a wrist unit in which links are rotatably connected to each other. In this robot, for example, the shafts of the links are made hollow such that a cable or the like can be arranged within the arm unit.

As an example of joint mechanisms for rotatably interconnecting the hollow shafts, there is known a joint mechanism in which bevel gears are used as a power delivery mechanism for delivering the power of a motor (see, e.g., Japanese Patent Application Publication No. H08-229874).

However, when the aforementioned conventional configuration is applied to a joint mechanism provided with a speed reducer, it is difficult to sufficiently increase the diameters of hollow portions of the link shafts. Moreover, in case of a gear drive mechanism using bevel gears, a backlash grows larger. This makes it difficult to accurately operate the links.

### SUMMARY OF THE INVENTION

In view of the above, an embodiment disclosed herein provides a joint mechanism and a robot which are capable of sufficiently increasing the diameters of hollow portions of links having hollow shafts and capable of reducing a backlash.

In accordance with an aspect of the embodiment disclosed herein, there is provided a joint mechanism, including: a motor including a motor shaft and a hypoid pinion provided at a tip end of the motor shaft; and a speed reducer configured to reduce a rotation speed of the motor at a speed reduction ratio. Further, the speed reducer includes a screw-shaped input shaft and a ring-shaped gear meshing with the screw-shaped input shaft and three-dimensionally intersecting the screw-shaped input shaft at a right angle, the screw-shaped input shaft includes a shaft body provided with a screw portion and a hypoid gear arranged at one end of the screw-shaped input shaft and configured to mesh with the hypoid pinion, and the screw-shaped input shaft has an axis three-dimensionally intersecting the motor shaft at a right angle.

With the embodiment disclosed herein, it is possible to provide a joint mechanism and a robot which are capable of sufficiently increasing the diameters of hollow portions of links and capable of reducing a backlash as far as possible.

### BRIEF DESCRIPTION OF THE DRAWINGS

Fig. 1 is a view showing a robot in accordance with an embodiment.
Fig. 2 is a view showing a joint unit provided in a wrist unit of the robot shown in Fig. 1.
Fig. 3 is an explanatory view taken along line III-III in Fig. 2, showing the positional relationship between a wrist frame and a motor.
Fig. 4 is an explanatory view taken along line IV-IV in Fig. 2, showing a speed reducer employed in a joint mechanism according to the embodiment.

### DESCRIPTION OF THE EMBODIMENT

An embodiment of a joint mechanism and a robot disclosed herein will now be described in detail with reference to the accompanying drawings. The present disclosure is not limited to the embodiment to be described below.

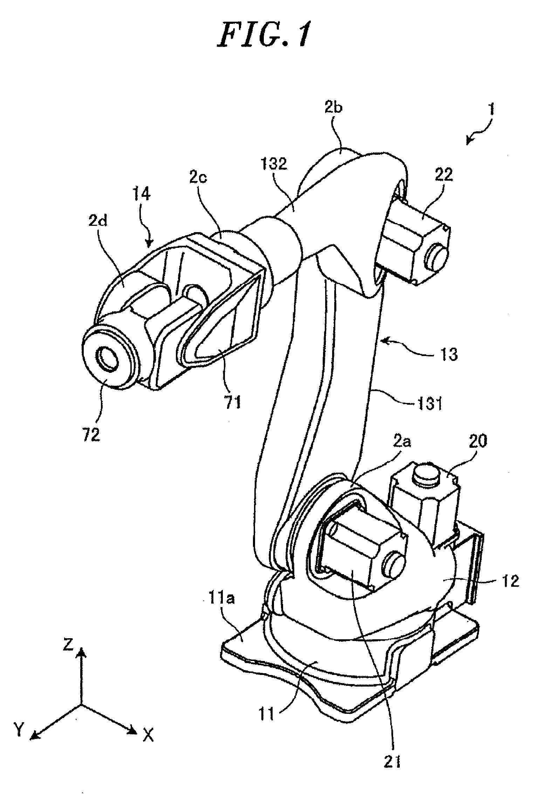

First, a robot 1 in accordance with the present embodiment will be described with reference to Fig. 1. In the following description, an X-axis and a Y-axis orthogonal to each other are defined as being parallel to an installation surface (e.g., a horizontal surface) on which the robot 1 is installed. A Z-axis is defined as being normal to the installation surface.

In the present embodiment, the robot 1 is, e.g., an articulated robot. As shown in Fig. 1, the robot 1 includes a base 11, a body unit 12 arranged on the base 11, an arm unit 13 connected to the body unit 12 and a wrist unit 14 arranged at the tip end of the arm unit 13.

The base 11 is fixed to an installation surface through a seat portion 11a. The body unit 12 is arranged on the base 11 to horizontally rotate about a vertical axis (the Z-axis in Fig. 1). The body unit 12 is horizontally rotated by the operation of a motor unit 20.

The arm unit 13 connected to the body unit 12 includes a first arm 131 and a second arm 132 as a plurality of links. The first arm 131 and the second arm 132 are rotatably connected to each other by a joint unit.

That is to say, the first arm 131 is connected to the body unit 12 through a first joint unit 2a to swing in the front-rear direction (the Y-direction). The second arm 132 is connected to the tip end portion of the first arm 131 through a second joint unit 2b to swing in the up-down direction (the Z-direction). The first joint unit 2a for swinging the first arm 131 is provided with a first motor unit 21. The second joint unit 2b for swinging the second arm 132 is provided with a second motor unit 22.

The wrist unit 14 includes a first wrist 71 and a second wrist 72 as a plurality of links. The first wrist 71 and the second wrist 72 are rotatably connected to each other by a joint unit. A wrist frame 710 of the first wrist 71 includes a base end portion connected to the tip end of the second arm 132 of the arm unit 13 through a third joint unit 2c to rotate about its rotation axis and a tip end portion formed into a bifurcated shape.

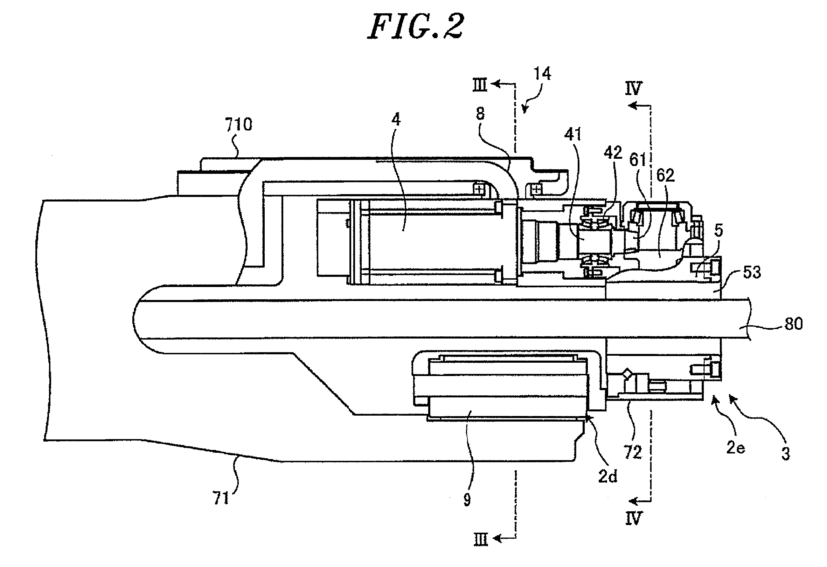

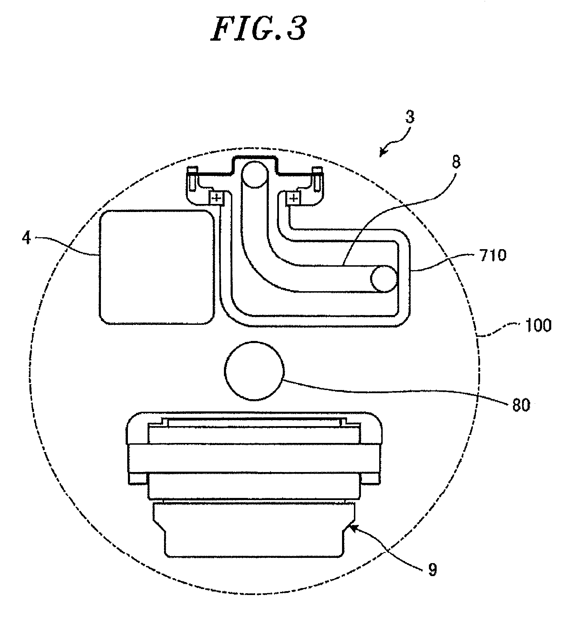

A cable 8 or the like is arranged within the wrist frame 710 (see Figs. 2 and 3). An additional cable 80 including a hose or the like extends through a central space of the first wrist 71 along the longitudinal direction of the second arm 132. Then, the cable 80 or the like passes through a below-mentioned hollow portion 53 of the second wrist 72 (Figs. 2 to 4).

In the meantime, the second wrist 72 is formed into a substantially cylindrical shape and is connected to the tip end portion of the bifurcated wrist frame 710 of the first wrist 71 to swing about a swing axis (e.g., in the Z-direction in Fig. 1) by a fourth joint unit 2d. The second wrist 72 rotates about its rotation axis by a fifth joint unit 2e arranged therein.

As shown in Fig. 2, the fourth joint unit 2d includes a speed reducing mechanism 9 arranged in the second wrist 72, a swinging motor (not shown) and a power delivery mechanism. The swinging motor can be installed at the base end of the bifurcated portion of the first wrist 71 and is operatively connected to the speed reducing mechanism 9 through the power delivery mechanism such as a drive shaft, a gear mechanism or a belt mechanism.

As shown in Fig. 2, further, the second wrist 72 is connected to the first wrist 71 and rotates about its rotation axis by the fifth joint unit 2e. The fifth joint unit 2e is arranged within the second wrist 72 as a driven member. The joint mechanism 3 in accordance with the present embodiment is installed in the fifth joint unit 2e.

Next, the joint mechanism 3 provided in the fifth joint unit 2e for rotating the second wrist 72 about its rotation axis will be described in detail with reference to Figs. 2 to 4.

As shown in Fig. 2, the joint mechanism 3 installed in the fifth joint unit 2e includes a motor 4 and a speed reducer 5 for reducing the rotation speed of the motor 4 at a predetermined speed reduction ratio. The motor 4 is installed to extend along the longitudinal direction of the wrist unit 14 and is arranged inside the bifurcated tip end portion of the wrist frame 710.

The motor 4 includes a motor shaft 41 supported by a bearing 42. The motor shaft 41 extends toward the second wrist 72. The motor shaft 41 is provided with a hypoid pinion 61 at the tip end thereof. A body unit of the motor 4 has a general structure which includes a stator fixed to an inner surface of a case and a rotor rotatably installed with a specified gap left between the rotor and the stator.

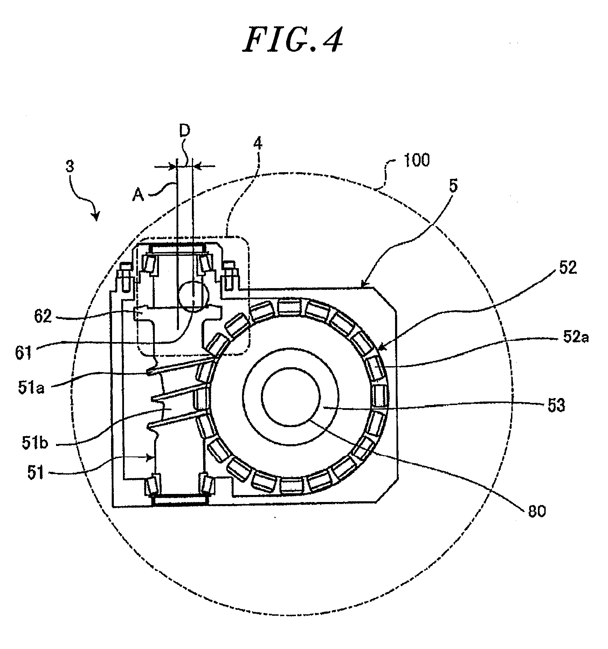

As shown in Fig. 4, the speed reducer 5 operatively connected to the motor 4 is formed into a hollow structure having a hollow portion 53. More specifically, the speed reducer 5 includes a ring-shaped gear 52 provided with a plurality of cam followers 52a corresponding to gear teeth arranged in the outer periphery of the ring-shaped gear 52 and a screw-shaped input shaft 51 configured to deliver the power of the motor 4 to the ring-shaped gear 52.

The screw-shaped input shaft 51 includes a shaft body 51b and a screw portion 51a formed on the shaft body 51b. The screw portion 51a serves as a cam member which moves the cam followers 52a to rotate the ring-shaped gear 52 about its own axis. A hypoid gear 62 is arranged at one end of the screw-shaped input shaft 51. The hypoid gear 62 meshes with the hypoid pinion 61 arranged in the motor shaft 41.

The screw-shaped input shaft 51 has an axis A which three-dimensionally intersects the motor shaft 41 at a right angle. Specifically, the speed reducer 5 is arranged such that the motor shaft 41 is positioned closer to the ring-shaped gear 52 than the center of the screw-shaped input shaft 51 and such that the axis of the screw-shaped input shaft 51 three-dimensionally intersects the motor shaft 41 at a right angle. Accordingly, as shown in Fig. 4, the screw-shaped input shaft 51 and the motor shaft 41 are offset by a distance D, and the motor 4 can be offset by the distance D closer to the hollow portion 53 of the speed reducer 5.

That is to say, as shown in Fig. 3, the motor 4 can be arranged as close to the wrist frame 710 as possible without protruding from a desired region 100. The region 100 is, e.g., a circular region which accommodates the outermost periphery of the wrist unit 14 and which has a specified diameter.

In the ring-shaped gear 52 meshing with the screw-shaped input shaft 51, the axis of the hollow portion 53 three-dimensionally intersects the screw-shaped input shaft 51 at a right angle. Specifically, the screw-shaped input shaft 51 and the ring-shaped gear 52 have a configuration like a worm gear. The screw-shaped input shaft 51 corresponds to a worm and the ring-shaped gear 52 corresponds to a worm wheel.

With the aforementioned configuration, the rotation of the motor 4 is delivered to the speed reducer 5. Accordingly, the second wrist 72 rotates about its rotation axis with the speed thereof reduced at a predetermined speed reduction ratio. Specifically, the rotation of the motor 4 is delivered from the motor shaft 41 to the hypoid pinion 61, the hypoid gear 62, the screw-shaped input shaft 51 and then the ring-shaped gear 52. Thus, the second wrist 72 rotates about its rotation axis. In this way, the input route of the power of the motor 4 to the second wrist 72 is changed at two stages by the hypoid pinion 61 and the hypoid gear 62 and by the screw-shaped input shaft 51 and the ring-shaped gear 52.

The speed reducer 5 according to the present embodiment is provided with the ring-shaped gear 52 having the hollow portion 53. For that reason, if the speed reducer 5 is disposed at the tip end of the wrist unit 14 of the robot 1, it becomes possible to obtain a sufficient diameter of the hollow portion (the hollow bore) while maintaining the positioning accuracy of the axis of the wrist unit 14.

As described above, in the ring-shaped gear 52, the members corresponding to the gear teeth meshing with the screw-shaped input shaft 51 are formed of the cam followers 52a. For that reason, it is possible for the ring-shaped gear 52 to suppress generation of a backlash as far as possible. Accordingly, the robot 1 can realize precise and accurate motion of the wrist unit 14.

As the speed reducer 5 having the same configuration as described above, it is possible to appropriately use, e.g., a Roller Drive (registered trademark).

As described above, the joint mechanism 3 in accordance with the present embodiment is installed in the rotating link, e.g., the second wrist 72. More specifically, the rotation of the motor 4 is inputted through the hypoid pinion 61 attached to the tip end of the motor shaft 41 and the hypoid gear 62 attached to the screw-shaped input shaft 51 serving as an input shaft of the speed reducer 5.

Accordingly, the rotation of the motor 4 is delivered to the speed reducer 5 with the speed thereof first reduced by the hypoid pinion 61 and the hypoid gear 62. This makes it possible to reduce the size of the speed reducer 5. Thus, the speed reducer 5 can be arranged within the second wrist 72, which makes it possible to reduce the size of the wrist unit 14 of the robot 1.

By employing the hypoid pinion 61 and the hypoid gear 62, the direction of the screw-shaped input shaft 51 of the speed reducer 5 can be changed to a direction perpendicular to the motor shaft 41. Accordingly, as shown in Fig. 2, it is possible to dispose the motor 4 along the longitudinal direction of the wrist unit 14 and to install the speed reducer 5 within the second wrist 72. This makes it possible to further reduce the size of the wrist unit 14 of the robot 1.

Since the motor 4 can be disposed adjacent to the second wrist 72, it is possible to directly deliver the power of the motor 4 from the motor shaft 41 to the speed reducer 5. Therefore, there is no need to install a drive shaft or other drive gears between the motor 4 and the speed reducer 5. This can make contribution to the reduction of the number of parts and the reduction of weight.

As described above, according to the joint mechanism 3 of the present embodiment, it is possible to increase the degree of freedom of design while realizing the size reduction of the speed reducer 5. This helps reduce the size of the wrist unit 14.

In the aforementioned embodiment, the joint mechanism 3 is used in driving the second wrist 72 of the wrist unit 14. Alternatively, the joint mechanism 3 according to the present embodiment may be applied to, e.g., the second joint unit 2b shown in Fig. 1. In this case, if the second arm 132 is formed into a hollow structure, it is possible to secure a hollow bore communicating with the hollow structure and to dispose a cable or the like within the second arm 132.

It should be understood by those skilled in the art that various modifications, combinations, sub-combinations and alterations may occur depending on design requirements and other factors insofar as they are within the scope of the appended claims or the equivalents thereof.

## Claims

1. A joint mechanism, comprising:
a motor including a motor shaft and a hypoid pinion provided at a tip end of the motor shaft; and
a speed reducer configured to reduce a rotation speed of the motor at a speed reduction ratio, the speed reducer including a screw-shaped input shaft and a ring-shaped gear meshing with the screw-shaped input shaft and three-dimensionally intersecting the screw-shaped input shaft at a right angle, the screw-shaped input shaft including a shaft body provided with a screw portion and a hypoid gear arranged at one end of the screw-shaped input shaft and configured to mesh with the hypoid pinion, the screw-shaped input shaft having an axis three-dimensionally intersecting the motor shaft at a right angle.

2. A robot comprising the joint mechanism of claim 1.

3. The robot of claim 2, further comprising a rotatable link configured to rotate by the joint mechanism.

4. The robot of claim 3, wherein the joint mechanism is installed in the rotatable link.

5. The robot of claim 3 or 4, further comprising an arm unit which has a plurality of links serially connected to each other, and a wrist unit installed at an end portion of the arm unit, wherein the rotatable link is the wrist unit connected to the arm unit by the joint mechanism.
